# EUROPEAN PATENT SPECIFICATION

(11) **EP 4 655 673 B1**
(45) Date of publication and mention of the grant of the patent: **28.10.2026**
(21) Application number: 23933334.7
(22) Date of filing: 17.04.2023
(51) Int. Cl.: G06F 9/50

(54) **POD AUTOSCALING RECOMMENDATIONS FOR WORKLOADS IN CONTAINER ORCHESTRATION PLATFORMS**
POD-AUTOSKALIERUNGSEMPFEHLUNGEN FÜR ARBEITSLASTEN IN CONTAINERORCHESTRIERUNGSPLATTFORMEN
RECOMMANDATIONS DE MISE À L'ÉCHELLE AUTOMATIQUE DE POD POUR CHARGES DE TRAVAIL DANS DES PLATEFORMES D'ORCHESTRATION DE CONTENEURS

(43) Date of publication of application: 03.12.2025
(73) Proprietor: Huawei Technologies Co., Ltd., Shenzhen, Guangdong 518129 (CN)
(72) Inventor: WU, Guangyu, 80992 Munich (DE); WANG, Mingxue, 80992 Munich (DE); XIAO, Shuxu, Shenzhen, Guangdong 518129 (CN)
(74) Representative: Gill Jennings & Every LLP
(86) International application number: PCT/CN2023/088773
(87) International publication number: WO 2024/216454

(56) References cited:
- US-A1- 2015 113 120
- US-A1- 2015 281 113
- US-A1- 2023 050 796
- YUNYUN QIU ET AL: "Research on Elastic Cloud Resource Management Strategies based on Kubernetes", 2022 IEEE INTERNATIONAL CONFERENCE ON ADVANCES IN ELECTRICAL ENGINEERING AND COMPUTER APPLICATIONS (AEECA), IEEE, 20 August 2022 (2022-08-20), pages 441 - 448, XP034211135, DOI: 10.1109/AEECA55500.2022.9918897

## Description

### Technical Field

The present disclosure relates, in general, to pod autoscaling recommendations for workloads in a container orchestration platform. Aspects relate to improvements in overall performance and edge case autoscaling usages for workloads considered unsuitable for certain platforms.

### Background

Containers are lightweight, executable application components that combine application source code with all the operating system (OS) libraries and dependencies required to run the source code in any environment.

Containers are smaller, more resource-efficient and more portable than virtual machines (VMs). In traditional virtualization a hypervisor is used to virtualize physical hardware. Each VM comprises a guest OS, a virtual copy of the hardware that the OS requires to run, along with an application and its associated libraries and dependencies. Instead of virtualizing underlying hardware, containers virtualize an OS. As such, each individual container contains only an application and its libraries and dependencies. The absence of a guest OS makes containers lightweight, fast and portable. Accordingly, containers (such as containerized microservices or serverless functions) are now typically used as the compute units of cloud-native applications.

A Pod is a group of one or more containers, with shared storage and network resources, and a specification for how to run the containers. A Pod comprises one or more application containers which are relatively tightly coupled.

Pods can support multiple cooperating processes (as containers) that form a cohesive unit of service. The containers for a pod can share resources and dependencies, communicate with one another, and coordinate when and how they are terminated.

In relatively small numbers, containers are easy to deploy and manage. However, the number of containerized applications is growing rapidly, and managing them at scale typically requires automation. Container orchestration can be used to automate the operational tasks around deploying and running containerized applications and services. Horizontal scaling means that a response to an increased workload is to deploy more Pods. This is in contrast to vertical scaling for example, in which more resources (for example: memory or CPU) would be assigned to Pods that are already running for the workload.

Generally, users directly place all workloads on the container orchestration platform, and the platform manages the number of pods required by these workloads. However, not all workloads may be suitable for the pod autoscaling that is provided by a given platform, and the side effects of autoscaling for such workloads may outweigh the benefits of using the autoscaler.

US 2023/050796 discloses (see description, paragraphs 0028, 0040 and 0080-0084): FIG. 2 depicts an embodiment of a container orchestration platform 200 describing an approach for periodically selecting a neural network controller of the container orchestration platform 200 that best predicts a resource consumption strategy for the workloads being executed on the platform. The selected neural network controller is able to implement the strategy by scaling up or scaling down the containers or pods 227a-227n and/or computing resources of the compute nodes 219a-219n to meet future workload demands on the container orchestration platform 200. The present invention may be a system, a method, and/or a computer program product at any possible technical detail level of integration. The computer program product may include a computer-readable storage medium (or media) having the computer-readable program instructions thereon for causing a processor to cany out aspects of the present invention.

YUNYUN QIU ET AL: "Research on Elastic Cloud Resource Management Strategies based on Kubernetes", 2022 IEEE INTERNATIONAL CONFERENCE ON ADVANCES IN ELECTRICAL ENGINEERING AND COMPUTER APPLICATIONS (AEECA), IEEE, 20 August 2022 (2022-08-20), pages 441-448, DOI: 10.1109/AEECA55500.2022.9918897 addresses the problem that Kubernetes' native horizontal scaling strategy, horizontal pod autoscaler(HPA), suffers from a single monitoring metric that does not accurately measure workload. In addition, there are response delays in the expansion stage, and the deletion of redundant Pods in the capacity reduction phase may adversely affect load balancing. In order to improve the efficiency of computing resource usage,D2 designs an automatic horizontal scaling system architecture based on the Monitor-Analyse-Planning-Execution (MAPE) loop to address the above problems. The system also equips the horizontal scaling system with the resource deletion strategy RRS, which enables the system to handle bursty workloads better. The main contribution of D2 is to propose a passive strategy based on weighted metric thresholds and an active strategy based on ARIMA prediction. The results of multiple experiments show that the ARIMA-prediction-based strategy has the problem of decreasing prediction accuracy in the late stage of the experiment, demonstrating the limitations of the ARIMA model in the real-time scaling system. The weighted-metric-threshold-based strategy outperforms HPA in that the timing, number, and replica variation of Pod scaling better matches workload variation and improves response latency. D2 provides a reference for researchers, developers, and others using Kubernetes to optimize the performance of HPA.

### Summary

An objective of the present disclosure is to provide a pod autoscaling recommendation for workloads in a container orchestration platform to enable improvement in overall performance and in order to prevent autoscaling usage in the platform for unsuitable workloads.

The foregoing and other objectives are achieved by the features of the independent claims.

Further implementation forms are apparent from the dependent claims, the description and the Figures.

A first aspect of the present disclosure provides a system for generating a scaling configuration for an orchestration platform configured to allocate computational resources for a workload, wherein the system comprises a processor configured to detect, using a set of workload data representing historical workload information, a scheduled job in a workload, wherein the historical workload information comprises a measure of computational load variation for the workload over a predetermined period of time, and wherein the scheduled job generates a recurrent transitory computational load variation above a predefined computational load threshold value with a duration greater than a first predefined threshold period of time in the historical workload information, determine, using the historical workload information, a first computational load variation for the workload over the predetermined period of time, wherein the first computational load variation comprises a measure of computational load variation for the workload over the predetermined period of time in the absence of the transitory computational load variation, determine whether computational load bursts are present in the first computational load variation for the workload over the predetermined period of time, and generate a scaling configuration for the workload on the basis of the determination of the presence of computational load bursts, wherein the scaling configuration comprises a scaling profile for the allocation of computational resources for the detected scheduled job.

Accordingly, it can be determined whether a workload is suitable for autoscaling and a profile can be provided for scaling that takes account of scheduled jobs or tasks that are part of the workload as determined from historical workload data. As such, rather than taking a reactive approach to scaling, in which resources may be requested too late or not provided in time to accommodate a scheduled job in a workload, a scaling profile can be generated that enables resources to be provided for a workload without the risk of expenditure caused by excessive resource requests.

In an implementation of the first aspect, the processor can be configured to select a time range centred around the transitory computational load variation within the historical workload information, and filter the set of workload data within the selected time range to determine the first computational load variation. The processor can be further configured to detect transient spikes in computational load variation above the predefined computational load threshold value, wherein a transient spike in computational load variation has a duration less than a second predefined threshold period of time in the historical workload information, and merge the detected transient spikes in computational load variation to form a representation of a scheduled job in the event that the detected transient spikes in computational load variation all occur within a third predefined threshold period of time in the historical workload information.

In an example, the processor can be further configured to determine whether a number of unmerged detected transient spikes for the workload exceeds a threshold burst value. The processor can be further configured to generate the scaling configuration for the workload when the number of unmerged detected transient spikes for the workload is below the threshold burst value.

The set of workload data can comprise historical workload information for multiple execution instances of the workload, and the processor can be further configured to normalise the set of workload data by augmenting respective measures of computational load variation for the multiple execution instances of the workload so that each measure of computational load variation extends over the same predetermined period of time and/or time shift a measure of computational load variation so that each measure of computational load variation begins at the same starting point of the predetermined period of time.

A second aspect of the present disclosure provides a machine-readable storage medium encoded with instructions for generating a scaling configuration for an orchestration platform configured to allocate computational resources for a workload, the instructions executable by a processor, whereby to cause the processor to detect, using a set of workload data representing historical workload information, a scheduled job in a workload, wherein the historical workload information comprises a measure of computational load variation for the workload over a predetermined period of time, and wherein the scheduled job generates a recurrent transitory computational load variation above a predefined computational load threshold value with a duration greater than a first predefined threshold period of time in the historical workload information, determine, using the historical workload information, a first computational load variation for the workload over the predetermined period of time, wherein the first computational load variation comprises a measure of computational load variation for the workload over the predetermined period of time in the absence of the transitory computational load variation, determine whether computational load bursts are present in the first computational load variation for the workload over the predetermined period of time, and generate a scaling configuration for the workload on the basis of the determination of the presence of computational load bursts, wherein the scaling configuration comprises a scaling profile for the allocation of computational resources for the detected scheduled job.

In an implementation of the second aspect, the machine-readable storage medium can comprise instructions executable by the processor, whereby to cause the processor to select a time range centred around the transitory computational load variation within the historical workload information, and filter the set of workload data within the selected time range to determine the first computational load variation. The machine-readable storage medium can comprise instructions executable by the processor, whereby to cause the processor to detect transient spikes in computational load variation above the predefined computational load threshold value, wherein a transient spike in computational load variation has a duration less than a second predefined threshold period of time in the historical workload information, and merge the detected transient spikes in computational load variation to form a representation of a scheduled job in the event that the detected transient spikes in computational load variation occur within a third predefined threshold period of time in the historical workload information. The machine-readable storage medium can comprise instructions executable by the processor, whereby to cause the processor to determine whether a number of unmerged detected transient spikes for the workload exceeds a threshold burst value. The machine-readable storage medium can comprise instructions executable by the processor, whereby to cause the processor to generate the scaling configuration for the workload when the number of unmerged detected transient spikes for the workload is below the threshold burst value.

In an example, the set of workload data can comprise historical workload information for multiple execution instances of the workload, and the machine-readable storage medium can comprise instructions executable by the processor, whereby to cause the processor to normalise the set of workload data by augmenting respective measures of computational load variation for the multiple execution instances of the workload so that each measure of computational load variation extends over the same predetermined period of time and/or time shift a measure of computational load variation so that each measure of computational load variation begins at the same starting point of the predetermined period of time. The machine-readable storage medium can comprise instructions executable by the processor, whereby to cause the processor to generate a mask defined by the time range, and determine the presence of a false detection of a transitory computational load variation within the time range using the mask, the false detection comprising a transitory computational load variation that extends, in duration, by a predetermined amount outside of the mask.

A third aspect of the present disclosure provides apparatus for generating a scaling configuration for an orchestration platform configured to allocate computational resources for a workload, wherein the apparatus comprises a detection engine configured to detect a scheduled job in a workload using a set of workload data representing historical workload information, wherein the historical workload information comprises a measure of computational load variation for the workload over a predetermined period of time, and wherein the scheduled job generates a recurrent transitory computational load variation above a predefined computational load threshold value with a duration greater than a first predefined threshold period of time in the historical workload information, determine, using the historical workload information, a first computational load variation for the workload over the predetermined period of time, wherein the first computational load variation comprises a measure of computational load variation for the workload over the predetermined period of time in the absence of the transitory computational load variation, determine whether computational load bursts are present in the first computational load variation for the workload over the predetermined period of time, and generate a scaling configuration for the workload on the basis of the determination of the presence of computational load bursts, , wherein the scaling configuration comprises a scaling profile for the allocation of computational resources for the detected scheduled job.

In an implementation of the third aspect, the detection engine can select a time range centred around the transitory computational load variation within the historical workload information, and filter the set of workload data within the selected time range to determine the first computational load variation.

These and other aspects of the invention will be apparent from the embodiment(s) described below.

### Brief Description of the Drawings

In order that the present disclosure may be more readily understood, embodiments will now be described, by way of example, with reference to the accompanying drawings, in which:
Figure 1 is a schematic representation of a system for generating a scaling configuration for an orchestration platform configured to allocate computational resources for a workload, according to an example;
Figure 2 is a schematic representation of computational workload variations for multiple execution instances of a workload, according to an example;
Figure 3 is a schematic representation of computational workload variations for multiple execution instances of a workload, according to an example;
Figure 4 is a schematic representation of a portion of a workload from historical workload data, according to an example; and
Figure 5 is a schematic representation of a machine according to an example.

### Detailed Description

Example embodiments are described below in sufficient detail to enable those of ordinary skill in the art to embody and implement the systems and processes herein described. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof. The term "and/or" is only an association relationship for describing associated objects and represents that three relationships may exist such that A and/or B may indicate that A exists alone, A and B exist at the same time, or B exists alone. The character "/" generally represents that the associated objects are in an "or" relationship.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

The following contains specific information related to implementations of the present disclosure. The drawings and their accompanying detailed disclosure are merely directed to implementations. However, the present disclosure is not limited to these implementations. Other variations and implementations of the present disclosure will be obvious to those skilled in the art.

The phrases "in one implementation," or "in some implementations," may each refer to one or more of the same or different implementations. The term "coupled" is defined as connected whether directly or indirectly through intervening components and is not necessarily limited to physical connections. The expression "at least one of A, B and C" or "at least one of the following: A, B and C" means "only A, or only B, or only C, or any combination of A, B and C."

The terms "system" and "network" may be used interchangeably.

For the purposes of explanation and non-limitation, specific details such as functional entities, techniques, protocols, and standards are set forth for providing an understanding of the present disclosure. In other examples, detailed disclosure of well-known methods, technologies, systems, and architectures are omitted so as not to obscure the present disclosure with unnecessary details.

Persons skilled in the art will immediately recognize that any network function(s) or algorithm(s) disclosed may be implemented by hardware, software or a combination of software and hardware. Disclosed functions may correspond to modules which may be software, hardware, firmware, or any combination thereof

A software implementation may include machine- and/or computer- readable and/or executable instructions stored on a machine- and/or computer-readable medium such as memory or other types of storage devices. One or more microprocessors or general-purpose computers with communication processing capability may be programmed with corresponding executable instructions and perform the disclosed network function(s) or algorithm(s).

The microprocessors or general-purpose computers may include Applications Specific Integrated Circuitry (ASIC), programmable logic arrays, and/or using one or more Digital Signal Processor (DSPs). Although some of the disclosed implementations are oriented to software installed and executing on computer hardware, alternative implementations implemented as firmware or as hardware or as a combination of hardware and software are well within the scope of the present disclosure. The computer readable medium includes but is not limited to Random Access Memory (RAM), Read Only Memory (ROM), Erasable Programmable Read-Only Memory (EPROM), Electrically Erasable Programmable Read-Only Memory (EEPROM), flash memory, Compact Disc Read-Only Memory (CD-ROM), magnetic cassettes, magnetic tape, magnetic disk storage, or any other equivalent medium capable of storing computer-readable instructions.

When placing workloads on a container orchestration platform so that the platform can manage the number of pods required by these workloads, it can be requirement - to ensure quality of service for example - that each workload has to be manually analysed in order to determine whether it comprises any scheduled jobs or tasks and whether it is suitable for elastic autoscaling. A scheduled job or task can comprise, e.g., a background task (for a backend service for example) that is executed according to a predefined schedule. A scheduled job can be executed at a specific time and/or in response to the initiation or completion of one or more other tasks or jobs, and/or be executed so that it finishes at predefined deadline.

However, in the context of autoscaling for workloads that comprise scheduled jobs, autoscalers only tend to focus only on how to provide rich metric-based scaling rules and ignore the specific characteristics of each workload. For example, historical data can be used to check whether a workload contains one or more scheduled jobs. If it does, the autoscaler will check the extra resources required by the scheduled jobs, the job duration, and job periodicity. However, the scheduled job load is separated from the total load associated with the workload.

When autoscaling is applied for a workload that is not suitable for autoscaling, container replicas are frequently added to or deleted for the workload. As a result, the stability of the workload deteriorates.

A system for generating a scaling configuration for an orchestration platform configured to allocate computational resources for a workload, wherein the system comprises a processor configured to:
According to an example, a scaling configuration for an orchestration platform configured to allocate computational resources for a workload can be provided. An orchestration platform can determine whether a workload is suitable for autoscaling or not (such as when moving workloads into the platform for example), detect scheduled jobs in the workload, and prepare a corresponding number of pods for the extra load generated by the scheduled jobs in advance. A proactive recommendation report for each workload can be provided, which meets the requirements of service reliability and saves resource costs.

Historical data relating to a workload can be used to check the time range and magnitude of scheduled jobs that are executed as part of the workload. The workload can then be divided into a scheduled job load and a normal load. For example, a normal load can comprise the workload without detected scheduled jobs. For each workload to be deployed on a container orchestration platform, the past load status can be analysed to check whether the workload requires an autoscaling function. A proactive recommendation report with a suitable configuration for each workload can be generated.

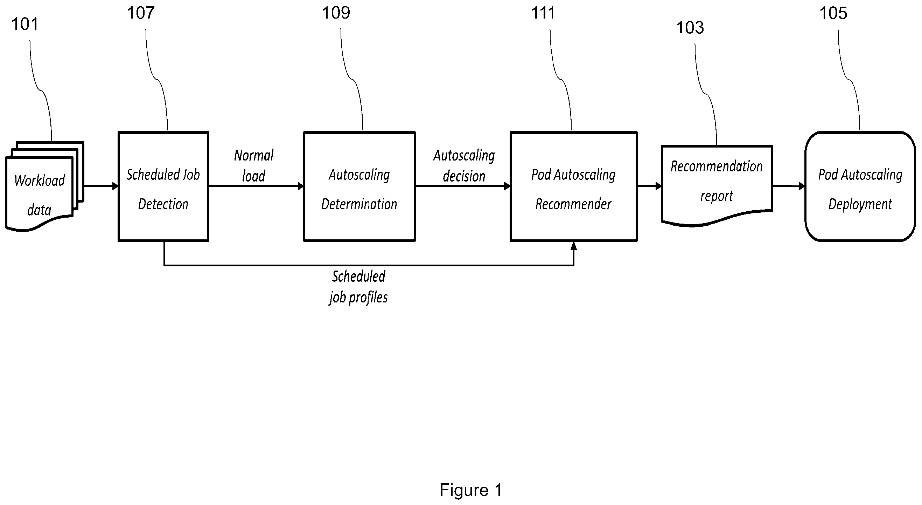

Figure 1 is a schematic representation of a system for generating a scaling configuration for an orchestration platform configured to allocate computational resources for a workload, according to an example. In the example of figure 1, the system uses a time series of historical workload data 101. The workload data 101 comprises data representing timestamps associated with the timing of scheduled jobs. For example, a timestamp can comprise a start time and/or an end time of a scheduled job. In some examples, a timestamp may additionally comprise a duration for a scheduled job. A pod autoscaling recommendation report 103 can be provided by the system of figure 1. The report 103 can be used to deploy an autoscaling implementation 105 for a pod or pods.

A scheduled job detection module 107 can be used to detect scheduled jobs and create a profile for a service workload based on the historical data 101. For example, the scheduled job detection module 107 can detect, using the set of workload data 101 representing historical workload information, a scheduled job in a workload. In an example, the historical workload information 101 can comprise a measure of computational load variation for the workload over a predetermined period of time. In an example, a scheduled job generates a recurrent transitory computational load variation above a predefined computational load threshold value with a duration greater than a first predefined threshold period of time in the historical workload information. As such, a scheduled job can be detected by the scheduled job detection module 107 using the historical data 101 by determining the presence of transitory computational load variations that are the basis of a computational load that is above a predefined computational load threshold value for a period of time that is longer than a first predefined threshold period of time. In order to form a detected scheduled job, such a detected transitory computational load variation will be recurrent in the historical data 101. That is, the detected transitory computational load variation will occur on more than one occasion in a workload, such as at specific times and/or on specific days for example. A detected transitory computational load variation may occur with a specific periodicity within the computational load variations of a workload as shown by historical workload data.

In block 109, a determination is made as to whether a workload is suitable for autoscaling based on the output of a normal load from the scheduled job detection module 107. That is, in an example, the historical workload information 101 can be used to determine a first computational load variation for the workload over the predetermined period of time, wherein the first computational load variation comprises a measure of computational load variation for the workload over the predetermined period of time in the absence of the transitory computational load variation (i.e., in the absence of a scheduled job). The first computational load variation for the workload can therefore represent the normal load as described above, which comprises a computational workload variation in the absence of any one or more scheduled jobs. The autoscaling recommender 111 can generate the report 103 for each workload including an autoscaling configuration. That is, a scaling configuration for the workload can be generated that comprises a scaling profile for the allocation of computational resources for the detected scheduled job and/or the normal workload.

According to an example, scheduled job detection module 107 can perform the following processes in respect of historical workload data 101:
1. Normalize historical workload data 101 by, for example:
   padding - adding part of the data from the first period to the original data to produce data for multiple complete cycles; and/or
   shifting - shifting data to align the beginning of the cycle.
   In an example, a set of workload data 101 can comprise historical workload information for multiple execution instances of the workload. Accordingly, a set of workload data 101 can be normalised by augmenting respective measures of computational load variation for the multiple execution instances of the workload so that each measure of computational load variation extends over the same predetermined period of time and/or time shifting a measure of computational load variation so that each measure of computational load variation begins at the same starting point of the predetermined period of time.
2. Detect spikes: a spike is defined as a large load increases, and it can last for several time points.

A spike can comprise a scheduled job in a workload. Accordingly, a spike in historical workload data 101 can comprise a transitory computational load variation above a predefined computational load threshold value with a duration greater than a first predefined threshold period of time. In an example, a predefined computational load threshold value can be set based on a value (such as an average value for example) of computational workload variation in historical workload data relating to a normal load as described above, or calculated based on, e.g., an average or running average value of computational workload variation in historical workload data, which can be a value that precedes a spike for example.

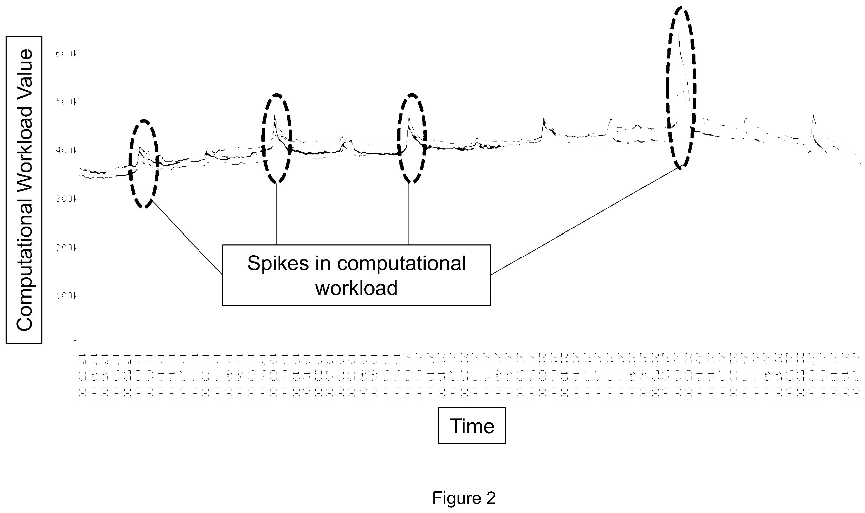

Figure 2 is a schematic representation of computational workload variations for multiple execution instances of a workload, according to an example. Multiple spikes in computational workload can be seen from the historical workload data of the multiple execution instances for a workload of figure 2.

3. Compute mask: look around the near time points and build a mask for time points where spikes usually happen, small time shifts are permitted.

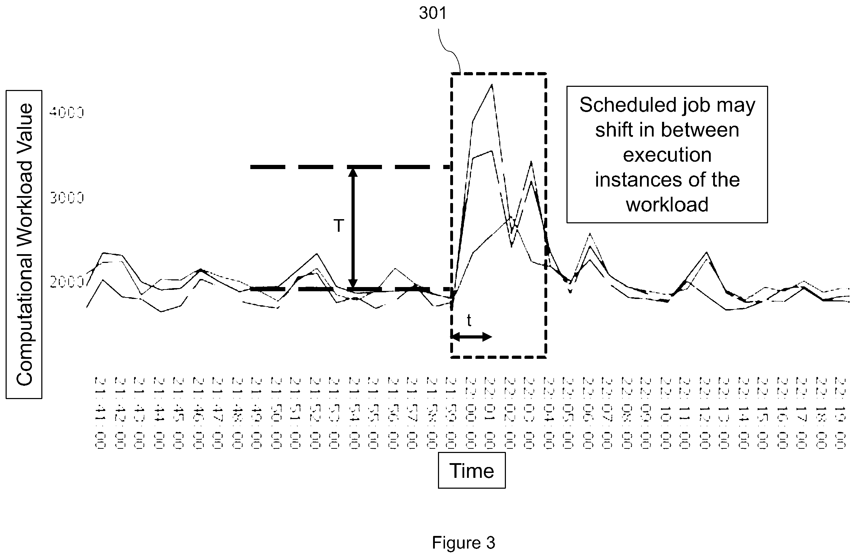

Figure 3 is a schematic representation of computational workload variations for multiple execution instances of a workload, according to an example. In the example of figure 3, a time range 301 centred around transitory computational load variations within the historical workload information is selected. The set of workload data within the selected time range 301 is filtered to determine the first computational load variation.

With reference to figure 3, a predefined computational load threshold value, T, and a first predefined threshold period of time, t, are depicted. In an example, a baseline for T can be determined from the average value of the computational load threshold value of the multiple execution instances. For example, at each timepoint (Time) an average value of the computational load threshold value can be determined. A value of computational load threshold value or an average value of computational load threshold value that exceeds this by an amount T or more, and which exceeds T for a time period greater than t can be determined as a spike.

4. Refine mask: remove long spikes as they are false detections.

For example, an initial detected spike could be a 'long' spike (e.g., it lasts for hours), which represents a false detection. Accordingly, a predefined threshold value for time can be implemented and used to filter out such long spikes.

5. Split load: separate total load for scheduled jobs and normal load.

For example, at the region of a detected spike in historical workload data, 'normal' workload values can be interpolated. That is, a pair of values representing the start and end of a detected spike can be used as the start and end points, respectively, for linear interpolation.

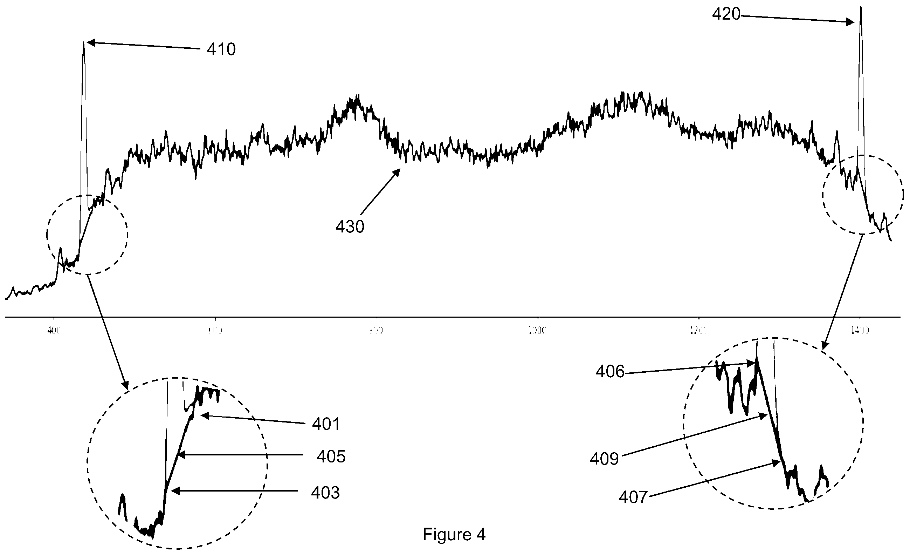

Figure 4 is a schematic representation of a portion of a workload from historical workload data, according to an example. In the example of figure 4, there are two spikes in workload (410; 420) that comprise transitory computational load variations above a 'normal' load 430 (i.e., a load variation devoid of spikes that occur according to and/or as defined by the criteria described above). As shown in the exploded portions for the spikes, each spike comprises two points, 401; 403 and 406; 407, that occur at the start and at the end of a spike.

The workload can be interpolated between these start and end points to form an interpolated workload 405, 409. The magnitude of a scheduled job, which in the example of figure 4 corresponds to the height of the spike 410 or 420 can then be determined by, e.g., subtracting the normal load from original total load, where the normal load comprises the workload with the interpolated portions 405; 409 between points 401;403, 406;407 instead of the workload represented by the spikes 410, 420.

For example, the workload around the region of spike (in arbitrary units of measurement for the purposes of explanation) may be:
load: [...1, 2, 3, 20, 20, 9...]

Accordingly, a mask can be generated and on the basis of the threshold workload value described above to provide:
mask: [F, F, F, T, T, F], T for a scheduled job, where F indicates workload values below the threshold, and T indicates workload values above the threshold.

In an example, the workload values relating to scheduled jobs can be replaced with special values, such NaN to provide:
load: [1, 2, 3, NaN, NaN, 9]

The 'NaN' values can be linearly interpolated to provide the normal load:
normal load: [1, 2, 3, 5, 7, 9]

The normal load information can then be used to calculate the values associated with the workloads of the scheduled jobs. For example (again, in arbitrary units):
Scheduled job load: [1, 2, 3, 20, 20, 9] - [1, 2, 3, 5, 7, 9] = [0, 0, 0, 15, 13, 0]

That is, the magnitude of a scheduled job, determined from a detected spike, can be calculated from the difference in magnitudes between workloads including spikes for scheduled jobs and workloads in which the spikes for scheduled jobs have been removed and replaced with interpolated data.

6. Merge spikes: a number of close spikes are merged into one as a single scheduled job.

For example, transient spikes in computational load variation above the predefined computational load threshold value, wherein a transient spike in computational load variation has a duration less than a second predefined threshold period of time in the historical workload information, can be detected and merged together. That is, such detected transient spikes in computational load variation can be merged to form a representation of a scheduled job in the event that the detected transient spikes in computational load variation all occur within a third predefined threshold period of time in the historical workload information.

According to an example, scheduled job detection module 107 can scan the determined normal load in order to determine changes that represent load bursts. Such load bursts, if present to a degree above a predetermined threshold number, may mean that autoscaling is not appropriate for the workload in question. Accordingly, an absolute change in computation load value, change_{absolute}, can be determined using the values of computation load a time t, loadₜ, and a time t-1, loadₜ₋₁, such that: ${change}_{absolute} = {load}_{t} - {load}_{t - 1}$

The number of load bursts can be checked in term of both relative and absolute changes, according to: ${change}_{relative} = {change}_{absolute} / {load}_{t - 1}$ $\left\{\begin{matrix}a burst , & \begin{matrix}{change}_{absolute} \geq ABSOLUTE _ CHANGE _ THRESHOLD and \\ {change}_{relative} \geq RELATIVE _ CHANGE _ THRESHOLD\end{matrix} \\ not a burst & otherwise\end{matrix}\right.$

The number of bursts in a cycle can then be determined, and an autoscaling decision can be made. For example, a small number of bursts (below the a predetermined threshold number) might be allowed per cycle, thereby meaning that autoscaling can be used. otherwise, autoscaling may not be suitable: $\left\{\begin{matrix}suitable , & {average}_{burst} & < BURSTS _ PER _ CYCLE \\ not suitable , & otherwist & \end{matrix}\right.$

Accordingly, it can be determined whether a number of unmerged detected transient spikes for the workload exceeds a threshold burst value. In an example, a scaling configuration for the workload can be generated when the number of unmerged detected transient spikes for the workload is below the threshold burst value.

According to an example, the system of figure 1 thus generates reports for workloads, which include a feasibility analysis that can include an autoscaling decision, a deployment configuration comprising a detailed configuration for workload to container orchestration, and a scheduled job profile, which can include a job time range in a cycle and/or loads caused by each scheduled job. As such, a system according to an example can recommend to end users whether a system or service workload is suitable for autoscaling based on workload historical data. This can reduce service risk before autoscaling is applied. If a workload is suitable for autoscaling, the system can recommend an autoscaling configuration including scheduled job profiles based on workload historical data, thereby avoiding extra resource expenditure caused by excessive resource requests. An autoscaling configuration report can be generated for workloads, including potential cost savings, current workload pattern, etc., in order to provide observable conclusions to further implement Infrastructure as Code (IaC), which is the process of managing and provisioning computer data centers through machine-readable definition files, rather than physical hardware configuration or interactive configuration tools.

Examples in the present disclosure can be provided as procedures, methods, systems or machine-readable instructions, such as any combination of software, hardware, firmware or the like. Such machine-readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a machine such as an apparatus (e.g., an apparatus for generating a scaling configuration for an orchestration platform configured to allocate computational resources for a workload), a general-purpose computer, a platform comprising user equipment such as a smart device, e.g., a smart phone, a special purpose computer, an embedded processor or processors of other programmable data processing devices to realize the functions described in the description and diagrams. In particular, a processor or processing apparatus may execute the machine-readable instructions. Thus, modules of apparatus (e.g. a detection engine) may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode. For example, the instructions may be provided on a non-transitory computer readable storage medium encoded with instructions, executable by a processor.

Further, the teachings herein may be implemented in the form of a computer or software product, such as a non-transitory machine-readable storage medium, the computer software or product being stored in a storage medium and comprising a plurality of instructions, e.g., machine readable instructions, for making a computer device implement the methods recited in the examples of the present disclosure.

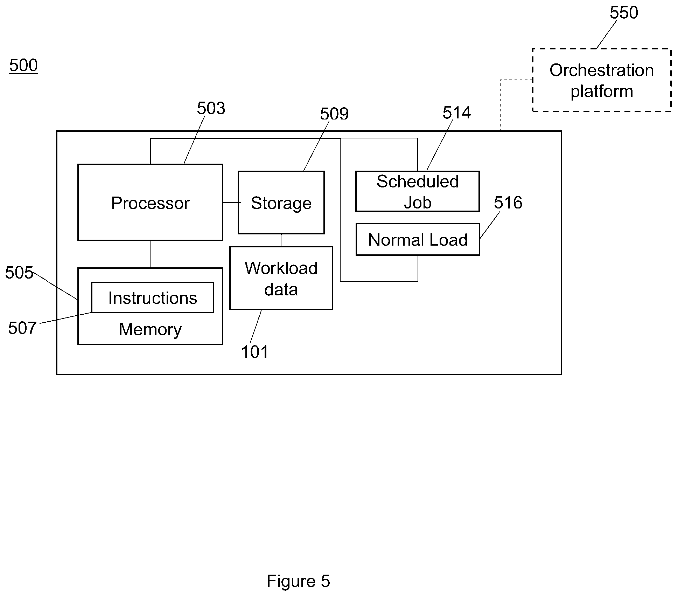

Figure 5 is a schematic representation of a machine according to an example. The machine of figure 5 can implement a system as described above with reference to figures 1 to 4, for example. The machine 500 comprises a processor 503, and a memory 505 to store instructions 507, executable by the processor 503. The machine comprises a storage 509 that can be used to store data representing, e.g., a set of workload data representing historical workload information and/or any threshold values, as described above. The instructions 507, executable by the processor 503, can cause the machine 500 to detect, using a set of workload data representing historical workload information 101, a scheduled job 514 in a workload, wherein the historical workload information comprises a measure of computational load variation for the workload over a predetermined period of time, and wherein the scheduled job generates a recurrent transitory computational load variation above a predefined computational load threshold value with a duration greater than a first predefined threshold period of time in the historical workload information, determine, using the historical workload information, a first computational load variation for the workload over the predetermined period of time, wherein the first computational load variation comprises a measure of computational load variation for the workload over the predetermined period of time in the absence of the transitory computational load variation (e.g., normal load 516), determine whether computational load bursts are present in the first computational load variation for the workload over the predetermined period of time, and generate a scaling configuration for the workload on the basis of the determination of the presence of computational load bursts, wherein the scaling configuration comprises a scaling profile for the allocation of computational resources for the detected scheduled job.

Accordingly, the machine 500 can implement a method for generating a scaling configuration for an orchestration platform 550 configured to allocate computational resources for a workload.

In some examples, some methods can be performed in a cloud-computing or network-based environment. Cloud-computing environments may provide various services and applications via the Internet. These cloud-based services (e.g., software as a service, platform as a service, infrastructure as a service, etc.) may be accessible through a web browser or other remote interface of the user equipment for example. Various functions described herein may be provided through a remote desktop environment or any other cloud-based computing environment.

While various embodiments have been described and/or illustrated herein in the context of fully functional computing systems, one or more of these exemplary embodiments may be distributed as a program product in a variety of forms, regardless of the particular type of computer-readable-storage media used to actually carry out the distribution. The embodiments disclosed herein may also be implemented using software modules that perform certain tasks. These software modules may include script, batch, or other executable files that may be stored on a computer-readable storage medium or in a computing system. In some embodiments, these software modules may configure a computing system to perform one or more of the exemplary embodiments disclosed herein. In addition, one or more of the modules described herein may transform data, physical devices, and/or representations of physical devices from one form to another.

The preceding description has been provided to enable others skilled in the art to best utilize various aspects of the exemplary embodiments disclosed herein. This exemplary description is not intended to be exhaustive or to be limited to any precise form disclosed. The embodiments disclosed herein should be considered in all respects illustrative and not restrictive. Reference should be made to the appended claims and their equivalents in determining the scope of the instant disclosure.

## Claims

1. A system for generating a scaling configuration for an orchestration platform configured to allocate computational resources for a workload, wherein the system comprises a processor configured to:
detect, using a set of workload data representing historical workload information, a scheduled job in a workload, wherein the historical workload information comprises a measure of computational load variation for the workload over a predetermined period of time, and wherein the scheduled job generates a recurrent transitory computational load variation above a predefined computational load threshold value with a duration greater than a first predefined threshold period of time in the historical workload information;
determine, using the historical workload information, a first computational load variation for the workload over the predetermined period of time, wherein the first computational load variation comprises a measure of computational load variation for the workload over the predetermined period of time in the absence of the transitory computational load variation;
determine whether computational load bursts are present in the first computational load variation for the workload over the predetermined period of time; and
generate a scaling configuration for the workload on the basis of the determination of the presence of computational load bursts, wherein the scaling configuration comprises a scaling profile for the allocation of computational resources for the detected scheduled job.

2. The system as claimed in claim 1, wherein the processor is further configured to:
select a time range centred around the transitory computational load variation within the historical workload information; and
filter the set of workload data within the selected time range to determine the first computational load variation.

3. The system as claimed in any preceding claim, wherein the processor is further configured to:
detect transient spikes in computational load variation above the predefined computational load threshold value, wherein a transient spike in computational load variation has a duration less than a second predefined threshold period of time in the historical workload information; and
merge the detected transient spikes in computational load variation to form a representation of a scheduled job in the event that the detected transient spikes in computational load variation all occur within a third predefined threshold period of time in the historical workload information.

4. The system as claimed in claim 3, wherein the processor is further configured to:
determine whether a number of unmerged detected transient spikes for the workload exceeds a threshold burst value.

5. The system as claimed in claim 4, wherein the processor is further configured to:
generate the scaling configuration for the workload when the number of unmerged detected transient spikes for the workload is below the threshold burst value.

6. The system as claimed in any preceding claim, wherein the set of workload data comprises historical workload information for multiple execution instances of the workload, wherein the processor is further configured to:
normalise the set of workload data by augmenting respective measures of computational load variation for the multiple execution instances of the workload so that each measure of computational load variation extends over the same predetermined period of time and/or time shift a measure of computational load variation so that each measure of computational load variation begins at the same starting point of the predetermined period of time.

7. A machine-readable storage medium encoded with instructions for generating a scaling configuration for an orchestration platform configured to allocate computational resources for a workload, the instructions executable by a processor, whereby to cause the processor to:
detect, using a set of workload data representing historical workload information, a scheduled job in a workload, wherein the historical workload information comprises a measure of computational load variation for the workload over a predetermined period of time, and wherein the scheduled job generates a recurrent transitory computational load variation above a predefined computational load threshold value with a duration greater than a first predefined threshold period of time in the historical workload information;
determine, using the historical workload information, a first computational load variation for the workload over the predetermined period of time, wherein the first computational load variation comprises a measure of computational load variation for the workload over the predetermined period of time in the absence of the transitory computational load variation;
determine whether computational load bursts are present in the first computational load variation for the workload over the predetermined period of time; and
generate a scaling configuration for the workload on the basis of the determination of the presence of computational load bursts, wherein the scaling configuration comprises a scaling profile for the allocation of computational resources for the detected scheduled job.

8. The machine-readable storage medium as claimed in claim 7, further comprising instructions executable by the processor, whereby to cause the processor to:
select a time range centred around the transitory computational load variation within the historical workload information; and
filter the set of workload data within the selected time range to determine the first computational load variation.

9. The machine-readable storage medium as claimed in claim 7 or 8, further comprising instructions executable by the processor, whereby to cause the processor to:
detect transient spikes in computational load variation above the predefined computational load threshold value, wherein a transient spike in computational load variation has a duration less than a second predefined threshold period of time in the historical workload information; and
merge the detected transient spikes in computational load variation to form a representation of a scheduled job in the event that the detected transient spikes in computational load variation occur within a third predefined threshold period of time in the historical workload information.

10. The machine-readable storage medium as claimed in claim 9, further comprising instructions executable by the processor, whereby to cause the processor to:
determine whether a number of unmerged detected transient spikes for the workload exceeds a threshold burst value.

11. The machine-readable storage medium as claimed in claim 10, further comprising instructions executable by the processor, whereby to cause the processor to:
generate the scaling configuration for the workload when the number of unmerged detected transient spikes for the workload is below the threshold burst value.

12. The machine-readable storage medium as claimed in any of claims 7 to 11, wherein the set of workload data comprises historical workload information for multiple execution instances of the workload, further comprising instructions executable by the processor, whereby to cause the processor to:
normalise the set of workload data by augmenting respective measures of computational load variation for the multiple execution instances of the workload so that each measure of computational load variation extends over the same predetermined period of time and/or time shift a measure of computational load variation so that each measure of computational load variation begins at the same starting point of the predetermined period of time.

13. The machine-readable storage medium as claimed in claim 8, further comprising instructions executable by the processor, whereby to cause the processor to:
generate a mask defined by the time range; and
determine the presence of a false detection of a transitory computational load variation within the time range using the mask, the false detection comprising a transitory computational load variation that extends, in duration, by a predetermined amount outside of the mask.

14. Apparatus for generating a scaling configuration for an orchestration platform configured to allocate computational resources for a workload, wherein the apparatus comprises a detection engine configured to:
detect a scheduled job in a workload using a set of workload data representing historical workload information, wherein the historical workload information comprises a measure of computational load variation for the workload over a predetermined period of time, and wherein the scheduled job generates a recurrent transitory computational load variation above a predefined computational load threshold value with a duration greater than a first predefined threshold period of time in the historical workload information;
determine, using the historical workload information, a first computational load variation for the workload over the predetermined period of time, wherein the first computational load variation comprises a measure of computational load variation for the workload over the predetermined period of time in the absence of the transitory computational load variation;
determine whether computational load bursts are present in the first computational load variation for the workload over the predetermined period of time; and
generate a scaling configuration for the workload on the basis of the determination of the presence of computational load bursts, , wherein the scaling configuration comprises a scaling profile for the allocation of computational resources for the detected scheduled job.

15. The apparatus as claimed in claim 14, wherein the detection engine is further configured to:
select a time range centred around the transitory computational load variation within the historical workload information; and
filter the set of workload data within the selected time range to determine the first computational load variation.

## Patentansprüche

1. System zum Erzeugen einer Skalierungskonfiguration für eine Orchestrierungsplattform, die konfiguriert ist, um Rechenressourcen für eine Arbeitslast zuzuweisen, wobei das System einen Prozessor umfasst, der konfiguriert ist zum:
Erkennen, unter Verwendung eines Satzes von Arbeitslastdaten, der historische Arbeitslastinformationen darstellt, eines geplanten Auftrags in einer Arbeitslast, wobei die historischen Arbeitslastinformationen ein Maß einer Rechenlastvariation für die Arbeitslast über einen zuvor bestimmten Zeitraum umfassen und wobei der geplante Auftrag eine wiederkehrende vorübergehende Rechenlastvariation oberhalb eines vordefinierten Rechenlastschwellenwerts mit einer Dauer, die größer als ein erster vordefinierter Schwellenzeitraum in den historischen Arbeitslastinformationen ist, erzeugt;
Bestimmen, unter Verwendung der historischen Arbeitslastinformationen, einer ersten Rechenlastvariation für die Arbeitslast über den zuvor bestimmten Zeitraum, wobei die erste Rechenlastvariation ein Maß der Rechenlastvariation für die Arbeitslast über den zuvor bestimmten Zeitraum bei dem Fehlen der vorübergehenden Rechenlastvariation umfasst;
Bestimmen, ob Rechenlastbursts in der ersten Rechenlastvariation für die Arbeitslast über den zuvor bestimmten Zeitraum vorhanden sind; und
Erzeugen einer Skalierungskonfiguration für die Arbeitslast auf der Grundlage der Bestimmung des Vorhandenseins von Rechenlastbursts, wobei die Skalierungskonfiguration ein Skalierungsprofil für die Zuweisung von Rechenressourcen für den erkannten geplanten Auftrag umfasst.

2. System nach Anspruch 1, wobei der Prozessor ferner konfiguriert ist zum:
Auswählen eines Zeitbereichs, der um die vorübergehende Rechenlastvariation innerhalb der historischen Arbeitslastinformationen zentriert ist, und
Filtern des Satzes von Arbeitslastdaten innerhalb des ausgewählten Zeitbereichs, um die erste Rechenlastvariation zu bestimmen.

3. System nach einem der vorstehenden Ansprüche, wobei der Prozessor ferner konfiguriert ist zum:
Erkennen von transienten Spitzen in der Rechenlastvariation oberhalb des vordefinierten Rechenlastschwellenwerts, wobei eine transiente Spitze in der Rechenlastvariation eine Dauer von weniger als einem zweiten vordefinierten Schwellenzeitraum in den historischen Arbeitslastinformationen aufweist; und
Zusammenführen der erkannten transienten Spitzen in der Rechenlastvariation, um eine Darstellung eines geplanten Auftrags auszubilden, falls die erkannten transienten Spitzen in der Rechenlastvariation alle innerhalb eines dritten vordefinierten Schwellenzeitraums in den historischen Arbeitslastinformationen auftreten.

4. System nach Anspruch 3, wobei der Prozessor ferner konfiguriert ist zum:
Bestimmen, ob eine Anzahl von nicht zusammengeführten erkannten transienten Spitzen für die Arbeitslast einen Schwellenburstwert überschreitet.

5. System nach Anspruch 4, wobei der Prozessor ferner konfiguriert ist zum:
Erzeugen der Skalierungskonfiguration für die Arbeitslast, wenn die Anzahl von nicht zusammengeführten erkannten transienten Spitzen für die Arbeitslast unterhalb des Burstschwellenwerts liegt.

6. System nach einem der vorstehenden Ansprüche, wobei der Satz von Arbeitslastdaten historische Arbeitslastinformationen für mehrere Ausführungsinstanzen der Arbeitslast umfasst, wobei der Prozessor ferner konfiguriert ist zum:
Normalisieren des Satzes von Arbeitslastdaten durch Erweitern jeweiliger Maße der Rechenlastvariation für die mehreren Ausführungsinstanzen der Arbeitslast, sodass sich jedes Maß der Rechenlastvariation über den gleichen zuvor bestimmten Zeitraum erstreckt, und/oder zeitlichen Verschieben eines Maßes der Rechenlastvariation, sodass jedes Maß der Rechenlastvariation an dem gleichen Startpunkt des zuvor bestimmten Zeitraums beginnt.

7. Maschinenlesbares Speichermedium, das mit Anweisungen zum Erzeugen einer Skalierungskonfiguration für eine Orchestrierungsplattform, die konfiguriert ist, um Rechenressourcen für eine Arbeitslast zuzuweisen, codiert ist, wobei die Anweisungen durch einen Prozessor ausführbar sind, wodurch der Prozessor veranlasst wird zum:
Erkennen, unter Verwendung eines Satzes von Arbeitslastdaten, der historische Arbeitslastinformationen darstellt, eines geplanten Auftrags in einer Arbeitslast, wobei die historischen Arbeitslastinformationen ein Maß der Rechenlastvariation für die Arbeitslast über einen zuvor bestimmten Zeitraum umfassen und wobei der geplante Auftrag eine wiederkehrende vorübergehende Rechenlastvariation oberhalb eines vordefinierten Rechenlastschwellenwerts mit einer Dauer, die größer als ein erster vordefinierter Schwellenzeitraum in den historischen Arbeitslastinformationen ist, erzeugt;
Bestimmen, unter Verwendung der historischen Arbeitslastinformationen, einer ersten Rechenlastvariation für die Arbeitslast über den zuvor bestimmten Zeitraum, wobei die erste Rechenlastvariation ein Maß der Rechenlastvariation für die Arbeitslast über den zuvor bestimmten Zeitraum bei dem Fehlen der vorübergehenden Rechenlastvariation umfasst;
Bestimmen, ob Rechenlastbursts in der ersten Rechenlastvariation für die Arbeitslast über den zuvor bestimmten Zeitraum vorhanden sind; und
Erzeugen einer Skalierungskonfiguration für die Arbeitslast auf der Grundlage der Bestimmung des Vorhandenseins von Rechenlastbursts, wobei die Skalierungskonfiguration ein Skalierungsprofil für die Zuweisung von Rechenressourcen für den erkannten geplanten Auftrag umfasst.

8. Maschinenlesbares Speichermedium nach Anspruch 7, das ferner Anweisungen, die durch den Prozessor ausführbar sind, umfasst, wodurch der Prozessor veranlasst wird zum:
Auswählen eines Zeitbereichs, der um die vorübergehende Rechenlastvariation innerhalb der historischen Arbeitslastinformationen zentriert ist; und
Filtern des Satzes von Arbeitslastdaten innerhalb des ausgewählten Zeitbereichs, um die erste Rechenlastvariation zu bestimmen.

9. Maschinenlesbares Speichermedium nach Anspruch 7 oder 8, das ferner Anweisungen, die durch den Prozessor ausführbar sind, umfasst, wodurch der Prozessor veranlasst wird zum:
Erkennen von transienten Spitzen in der Rechenlastvariation oberhalb des vordefinierten Rechenlastschwellenwerts, wobei eine transiente Spitze in der Rechenlastvariation eine Dauer von weniger als einem zweiten vordefinierten Schwellenzeitraum in den historischen Arbeitslastinformationen aufweist; und
Zusammenführen der erkannten transienten Spitzen in der Rechenlastvariation, um eine Darstellung eines geplanten Auftrags auszubilden, falls die erkannten transienten Spitzen in der Rechenlastvariation alle innerhalb eines dritten vordefinierten Schwellenzeitraums in den historischen Arbeitslastinformationen auftreten.

10. Maschinenlesbares Speichermedium nach Anspruch 9, das ferner Anweisungen, die durch den Prozessor ausführbar sind, umfasst, wodurch der Prozessor veranlasst wird zum:
Bestimmen, ob eine Anzahl von nicht zusammengeführten erkannten transienten Spitzen für die Arbeitslast einen Schwellenburstwert überschreitet.

11. Maschinenlesbares Speichermedium nach Anspruch 10, das ferner Anweisungen, die durch den Prozessor ausführbar sind, umfasst, wodurch der Prozessor veranlasst wird zum:
Erzeugen der Skalierungskonfiguration für die Arbeitslast, wenn die Anzahl von nicht zusammengeführten erkannten transienten Spitzen für die Arbeitslast unterhalb des Burstschwellenwerts liegt.

12. Maschinenlesbares Speichermedium nach einem der Ansprüche 7 bis 11, wobei der Satz von Arbeitslastdaten historische Arbeitslastinformationen für mehrere Ausführungsinstanzen der Arbeitslast umfasst, das ferner Anweisungen, die durch den Prozessor ausführbar sind, umfasst, wodurch der Prozessor veranlasst wird zum: Normalisieren des Satzes von Arbeitslastdaten durch Erweitern jeweiliger Maße der Rechenlastvariation für die mehreren Ausführungsinstanzen der Arbeitslast, sodass sich jedes Maß der Rechenlastvariation über den gleichen zuvor bestimmten Zeitraum erstreckt, und/oder zeitlichen Verschieben eines Maßes der Rechenlastvariation, sodass jedes Maß der Rechenlastvariation an dem gleichen Startpunkt des zuvor bestimmten Zeitraums beginnt.

13. Maschinenlesbares Speichermedium nach Anspruch 8, das ferner Anweisungen, die durch den Prozessor ausführbar sind, umfasst, wodurch der Prozessor veranlasst wird zum:
Erzeugen einer Maske, die durch den Zeitbereich definiert ist; und
Bestimmen des Vorhandenseins einer Fehlerkennung einer vorübergehenden Rechenlastvariation innerhalb des Zeitbereichs unter Verwendung der Maske, wobei die Fehlerkennung eine vorübergehende Rechenlastvariation, die sich in der Dauer um eine zuvor bestimmte Menge außerhalb der Maske erstreckt, umfasst.

14. Einrichtung zum Erzeugen einer Skalierungskonfiguration für eine Orchestrierungsplattform, die konfiguriert ist, um Rechenressourcen für eine Arbeitslast zuzuweisen, wobei die Einrichtung eine Erkennungsmaschine umfasst, die konfiguriert ist zum:
Erkennen eines geplanten Auftrags in einer Arbeitslast unter Verwendung eines Satzes von Arbeitslastdaten, der historische Arbeitslastinformationen darstellt, wobei die historischen Arbeitslastinformationen ein Maß der Rechenlastvariation für die Arbeitslast über einen zuvor bestimmten Zeitraum umfasst und wobei der geplante Auftrag eine wiederkehrende vorübergehende Rechenlastvariation oberhalb eines vordefinierten Rechenlastschwellenwerts mit einer Dauer, die größer als ein erster vordefinierter Schwellenzeitraum in den historischen Arbeitslastinformationen ist, erzeugt;
Bestimmen, unter Verwendung der historischen Arbeitslastinformationen, einer ersten Rechenlastvariation für die Arbeitslast über den zuvor bestimmten Zeitraum, wobei die erste Rechenlastvariation ein Maß der Rechenlastvariation für die Arbeitslast über den zuvor bestimmten Zeitraum bei dem Fehlen der vorübergehenden Rechenlastvariation umfasst;
Bestimmen, ob Rechenlastbursts in der ersten Rechenlastvariation für die Arbeitslast über den zuvor bestimmten Zeitraum vorhanden sind; und
Erzeugen einer Skalierungskonfiguration für die Arbeitslast auf der Grundlage der Bestimmung des Vorhandenseins von Rechenlastbursts, wobei die Skalierungskonfiguration ein Skalierungsprofil für die Zuweisung von Rechenressourcen für den erkannten geplanten Auftrag umfasst.

15. Einrichtung nach Anspruch 14, wobei die Erkennungsmaschine ferner konfiguriert ist zum:
Auswählen eines Zeitbereichs, der um die vorübergehende Rechenlastvariation innerhalb der historischen Arbeitslastinformationen zentriert ist; und
Filtern des Satzes von Arbeitslastdaten innerhalb des ausgewählten Zeitbereichs, um die erste Rechenlastvariation zu bestimmen.

## Revendications

1. Système de génération d'une configuration de mise à l'échelle pour une plateforme d'orchestration configurée pour allouer des ressources de calcul à une charge de travail, dans lequel le système comprend un processeur configuré pour :
détecter, à l'aide d'un ensemble de données de charge de travail représentant des informations de charge de travail historiques, une tâche planifiée dans une charge de travail, dans lequel les informations de charge de travail historiques comprennent une mesure de variation de charge de calcul pour la charge de travail sur une période de temps prédéterminée, et dans lequel la tâche planifiée génère une variation de charge de calcul transitoire récurrente supérieure à une valeur seuil de charge de calcul prédéfinie avec une durée supérieure à une première période de temps seuil prédéfinie dans les informations de charge de travail historiques ;
déterminer, à l'aide des informations de charge de travail historiques, une première variation de charge de calcul pour la charge de travail sur la période de temps prédéterminée, dans lequel la première variation de charge de calcul comprend une mesure de la variation de charge de calcul pour la charge de travail sur la période de temps prédéterminée en l'absence de la variation transitoire de charge de calcul ;
déterminer si des salves de charge de calcul sont présentes dans la première variation de charge de calcul pour la charge de travail sur la période de temps prédéterminée ; et
générer une configuration de mise à l'échelle pour la charge de travail sur la base de la détermination de la présence de salves de charge de calcul, dans lequel la configuration de mise à l'échelle comprend un profil de mise à l'échelle pour l'allocation de ressources de calcul pour le travail planifié détecté.

2. Système selon la revendication 1, dans lequel le processeur est en outre configuré pour :
sélectionner une plage temporelle centrée sur la variation transitoire de charge de calcul à l'intérieur des informations de charge de travail historiques; et
filtrer l'ensemble de données de charge de travail dans la plage temporelle sélectionnée pour déterminer la première variation de charge de calcul.

3. Système selon l'une quelconque revendication précédente, dans lequel le processeur est en outre configuré pour :
détecter des pics transitoires de variation de charge de calcul supérieurs à la valeur seuil prédéfinie de charge de calcul, dans lequel un pic transitoire de variation de charge de calcul a une durée inférieure à une seconde période seuil prédéfinie dans les informations de charge de travail historiques ; et
fusionner les pics transitoires détectés de variation de charge de calcul pour former une représentation d'un travail planifié dans le cas où les pics transitoires détectés de variation de charge de calcul se produisent tous au cours d'une troisième période de temps seuil prédéfinie dans les informations de charge de travail historiques.

4. Système selon la revendication 3, dans lequel le processeur est en outre configuré pour : déterminer si un nombre de pics transitoires détectés non fusionnés pour la charge de travail dépasse une valeur de rafale seuil.

5. Système selon la revendication 4, dans lequel le processeur est en outre configuré pour : générer la configuration de mise à l'échelle pour la charge de travail lorsque le nombre de pics transitoires détectés non fusionnés pour la charge de travail est inférieur à la valeur de rafale seuil.

6. Système selon l'une quelconque revendication précédente, dans lequel l'ensemble de données de charge de travail comprend des informations de charge de travail historiques pour de multiples instances d'exécution de la charge de travail, dans lequel le processeur est en outre configuré pour :
normaliser l'ensemble de données de charge de travail en augmentant des mesures respectives de variation de charge de calcul pour les multiples instances d'exécution de la charge de travail, de sorte que chaque mesure de variation de charge de calcul s'étend sur la même période de temps prédéterminée et/ou décalage temporel d'une mesure de variation de charge de calcul, de sorte que chaque mesure de variation de charge de calcul commence au même point de départ, de la période de temps prédéterminée.

7. Support de stockage lisible par machine codé avec des instructions permettant de générer une configuration de mise à l'échelle pour une plateforme d'orchestration configurée pour allouer des ressources de calcul pour une charge de travail, les instructions étant exécutables par un processeur, selon lequel elles amènent le processeur à :
détecter, à l'aide d'un ensemble de données de charge de travail représentant des informations historiques de charge de travail, une tâche planifiée dans une charge de travail, dans lequel les informations de charge de travail historique comprennent une mesure de variation de charge de calcul pour la charge de travail sur une période de temps prédéterminée, et dans lequel la tâche planifiée génère une variation de charge de calcul transitoire récurrente supérieure à une valeur seuil de charge de calcul prédéfinie avec une durée supérieure à une première période de temps seuil prédéfinie dans les informations de charge de travail historiques ;
déterminer, à l'aide des informations de charge de travail historiques, une première variation de charge de calcul pour la charge de travail sur la période de temps prédéterminée, dans lequel la première variation de charge de calcul comprend une mesure de la variation de charge de calcul pour la charge de travail sur la période de temps prédéterminée en l'absence de la variation transitoire de charge de calcul ;
déterminer si des salves de charge de calcul sont présentes dans la première variation de charge de calcul pour la charge de travail sur la période de temps prédéterminée ; et
générer une configuration de mise à l'échelle pour la charge de travail sur la base de la détermination de la présence de salves de charge de calcul, dans lequel la configuration de mise à l'échelle comprend un profil de mise à l'échelle pour l'allocation de ressources de calcul pour le travail planifié détecté.

8. Support de stockage lisible par machine selon la revendication 7, comprenant en outre des instructions exécutables par le processeur, selon lequel elles amènent le processeur à :
sélectionner une plage temporelle centrée sur la variation transitoire de charge de calcul à l'intérieur des informations de charge de travail historiques ; et
filtrer l'ensemble de données de charge de travail dans la plage temporelle sélectionnée pour déterminer la première variation de charge de calcul.

9. Support de stockage lisible par machine selon la revendication 7 ou 8, comprenant en outre des instructions exécutables par le processeur, selon lequel elles amènent le processeur à :
détecter des pics transitoires de variation de charge de calcul supérieurs à la valeur seuil prédéfinie de charge de calcul, dans lequel un pic transitoire de variation de charge de calcul a une durée inférieure à une seconde période de temps seuil prédéfinie dans les informations de charge de travail historiques ; et
fusionner les pics transitoires détectés de variation de charge de calcul pour former une représentation d'un travail planifié dans le cas où les pics transitoires détectés de variation de charge de calcul se produisent au cours d'une troisième période de temps seuil prédéfinie dans les informations de charge de travail historiques.

10. Support de stockage lisible par machine selon la revendication 9, comprenant en outre des instructions exécutables par le processeur, selon lequel elles amènent le processeur à :
déterminer si un nombre de pics transitoires détectés non fusionnés pour la charge de travail dépasse une valeur de rafale seuil.

11. Support de stockage lisible par machine selon la revendication 10, comprenant en outre des instructions exécutables par le processeur, selon lequel elles amènent le processeur à :
générer la configuration de mise à l'échelle pour la charge de travail lorsque le nombre de pics transitoires détectés non fusionnés pour la charge de travail est inférieur à la valeur de rafale seuil.

12. Support de stockage lisible par machine selon l'une quelconque des revendications 7 à 11, dans lequel l'ensemble de données de charge de travail comprend des informations de charge de travail historiques pour de multiples instances d'exécution de la charge de travail, comprenant en outre des instructions exécutables par le processeur, selon lequel elles amènent le processeur à :
normaliser l'ensemble de données de charge de travail en augmentant des mesures respectives de variation de charge de calcul pour les multiples instances d'exécution de la charge de travail, de sorte que chaque mesure de variation de charge de calcul s'étend sur la même période de temps prédéterminée et/ou décalage temporel d'une mesure de variation de charge de calcul, de sorte que chaque mesure de variation de charge de calcul commence au même point de départ, de la période de temps prédéterminée.

13. Support de stockage lisible par machine selon la revendication 8, comprenant en outre des instructions exécutables par le processeur, selon lequel elles amènent le processeur à :
générer un masque défini par la plage temporelle ; et
déterminer la présence d'une fausse détection d'une variation transitoire de charge de calcul dans la plage temporelle à l'aide du masque, la fausse détection comprenant une variation transitoire de charge de calcul qui s'étend, en durée, d'une quantité prédéterminée à l'extérieur du masque.

14. Appareil permettant de générer une configuration de mise à l'échelle pour une plateforme d'orchestration configurée pour allouer des ressources de calcul pour une charge de travail, dans lequel l'appareil comprend un moteur de détection configuré pour :
détecter une tâche planifiée dans une charge de travail à l'aide d'un ensemble de données de charge de travail représentant des informations de charge de travail historiques, dans lequel les informations de charge de travail historiques comprennent une mesure de variation de charge de calcul pour la charge de travail sur une période de temps prédéterminée, et dans lequel la tâche planifiée génère une variation de charge de calcul transitoire récurrente supérieure à une valeur seuil de charge de calcul prédéfinie avec une durée supérieure à une première période de temps seuil prédéfinie dans les informations de charge de travail historiques ;
déterminer, à l'aide des informations de charge de travail historiques, une première variation de charge de calcul pour la charge de travail sur la période de temps prédéterminée, dans lequel la première variation de charge de calcul comprend une mesure de la variation de charge de calcul pour la charge de travail sur la période de temps prédéterminée en l'absence de la variation transitoire de charge de calcul ;
déterminer si des salves de charge de calcul sont présentes dans la première variation de charge de calcul pour la charge de travail sur la période de temps prédéterminée ; et
générer une configuration de mise à l'échelle pour la charge de travail sur la base de la détermination de la présence de salves de charge de calcul, dans lequel la configuration de mise à l'échelle comprend un profil de mise à l'échelle pour l'allocation de ressources de calcul pour le travail planifié détecté.

15. Appareil selon la revendication 14, dans lequel le moteur de détection est en outre configuré pour :
sélectionner une plage temporelle centrée sur la variation transitoire de charge de calcul à l'intérieur des informations de charge de travail historiques ; et
filtrer l'ensemble de données de charge de travail dans la plage temporelle sélectionnée pour déterminer la première variation de charge de calcul.
